# FASCICULE DE BREVET EUROPEEN

(11) **EP 3 264 594 B1**
(45) Date de publication et mention de la délivrance du brevet: **02.01.2019**
(21) Numéro de dépôt: 17171370.4
(22) Date de dépôt: 16.05.2017
(51) Int. Cl.: H02S 20/30, H02S 20/24, F24S 25/00, F24S 25/16, F24S 25/60, F24S 25/11, F24S 25/10

(54) **ENSEMBLE DE FIXATION MODULAIRE POUR PANNEAU SOLAIRE**
MODULARE BEFESTIGUNGSANORDNUNG FÜR SOLARPANEEL
MODULAR ATTACHMENT ASSEMBLY FOR SOLAR PANEL

(30) Priorité: 17.06.2016 FR 1655636
(43) Date de publication de la demande: 03.01.2018
(73) Titulaire: IRFTS, 38240 Meylan (FR)
(72) Inventeur: REUZEAU, Franck, 38230 CHAVANOZ (FR)
(74) Mandataire: Prugneau, Philippe

(56) Documents cités:
- EP-A2- 1 783 440
- WO-A1-2015/069113
- US-A1- 2013 305 518
- US-A1- 2014 044 471
- US-A1- 2014 060 626

## Description

### Domaine technique

La présente invention concerne un ensemble de fixation pour un panneau sur un toit de bâtiment, et plus particulièrement un ensemble de fixation modulaire pour un panneau photovoltaïque sur un toit plat d'un bâtiment.

### Technique antérieure

Avec le développement rapide de l'énergie solaire, l'installation de panneaux solaires, comme les panneaux photovoltaïques, sur de grandes surfaces en toiture est une demande du marché. Ces grandes surfaces en toiture sont fournies notamment par les toits plats des entrepôts où des centaines, voir des milliers de panneaux peuvent être installés en lignes. Pour installer les panneaux solaires sur ces toits plats, on utilise des ensembles de fixation qui doivent être acheminés par centaines ou par milliers aux points d'installation.

Du document de brevet EP0857926 on connait un ensemble de fixation pour fixer un panneau solaire sur un toit de bâtiment qui permet d'orienter le panneau solaire par rapport à la surface du toit, par exemple avec une inclinaison de 25° par rapport à l'horizontale. L'ensemble de fixation comprend essentiellement un bac en matière plastique gerbable conçu pour être empilable de façon à rationaliser le stockage et le transport.

On connaît encore du document de brevet EP1619727 un tel ensemble de fixation qui comprend un châssis porteur à ancrer sur le toit et un cadre inclinable monté sur le châssis.

On connaît encore du document de brevet EP1783440 un tel ensemble de fixation comprenant un socle rectangulaire sur lequel se montent quatre pieds de fixation, deux à l'avant du socle et deux à l'arrière du socle. Ces pieds sont conçus extensibles afin de pouvoir régler l'inclinaison du panneau qui est fixé à l'extrémité haute des pieds.

On connaît encore du document de brevet WO2014/205802 un tel ensemble de fixation avec des pieds intégrés à un cadre en matière plastique.

### Exposé de l'invention

Le but de l'invention est de proposer un autre ensemble de fixation qui permet de fixer différents types de panneaux solaires, qui est modulaire, gerbable et optimisé pour un stockage, un transport et aussi un montage en toiture rationalisés.

A cet effet, l'invention a pour objet un ensemble de fixation pour fixer un panneau sur un toit de bâtiment comprenant un socle rectangulaire destiné à être fixé à plat sur le toit du bâtiment et des pieds adaptés pour se fixer entre le socle et le panneau en permettant une inclinaison réglable du panneau par rapport au toit, caractérisé en ce que le socle rectangulaire a un premier grand côté bordé par un alignement de cavités espacées à intervalle régulier, les pieds étant conçus avec une partie basse du pied adaptée pour s'insérer dans une des cavités du socle de façon à être fixé au socle à une position choisie le long du premier grand côté du socle et avec une partie haute munie d'une tête inclinable destinée à être accrochée au panneau, en ce que les pieds comprennent un pied avant et un pied arrière de plus grande hauteur que le pied avant, en ce que le socle a un second grand côté opposé au premier grand côté et qui est longé par un premier logement et deux seconds logements disposés de part et d'autre du premier logement le long du second grand côté du socle, les logements étant définis par une bordure nervurée du socle et des nervures de renforts s'étendant entre l'alignement de cavités et le second grand côté du socle, les logements étant en outre traversant selon l'épaisseur du socle et étant dimensionnés de telle manière à loger, quand un socle est superposé à un autre socle dans l'épaisseur des deux socles superposés, deux pieds arrière installés à plat, en tête bêche et en alignement avec le second grand côté des socles dans le premier logement des deux socles superposés, et un pied avant en biais par rapport au second grand côté des deux socles superposés dans chaque second logement des deux socles superposés, en ce que chaque socle est conçu pour être réversible à 180° de telle façon que les deux socles superposés une fois séparés peuvent être montés sur la toiture avec leurs seconds grands côté face à face pour porter un panneau ou encore avec un second grand côté d'un socle qui fait face à un premier grand côté de l'autre socle, et en ce que les grands côtés du socle ont une longueur équivalente à la largeur d'une palette de manutention.

L'invention peut encore présenter les particularités suivantes :
- le socle bordé par la bordure nervurée périphérique est munie de doigts de centrage pour un gerbage des socles à plat ;
- le socle peut être muni de points d'ancrage pour la fixation par vissage du socle sur le toit ;
- il peut être prévu une semelle de protection qui se place entre le toit et le socle;
- il peut être prévu des lests qui se placent sur le dessus du socle pour plaquer le socle à plat contre le toit;
- le panneau est avantageusement un panneau photovoltaïque.

### Description sommaire des dessins

La présente invention sera mieux comprise et d'autres avantages apparaîtront à la lecture de la description détaillée des modes de réalisation pris à titre d'exemples nullement limitatifs et illustrés par les dessins annexés dans lesquels :
- la figure 1 est une illustration schématique de panneaux photovoltaïques implantés en lignes sur une surface plane, utilisant l'ensemble de fixation selon l'invention ;
- la figure 2 est une illustration schématique d'un gerbage de socles sur une palette de manutention ;
- les figures 3A et 3B illustrent les pieds avant et arrière et le socle vus en perspective ;
- les figures 4A et 4B sont des vues respectivement en perspective et de dessus de deux socles en superposition ;
- les figures 5A et 5B sont encore des vues respectivement en perspective et de dessus de deux socles en superposition avec les pieds rangés dans les socles ;
- la figure 6 montre en perspective la tête inclinable prévue en partie haute des pieds.

### Description des modes de réalisation

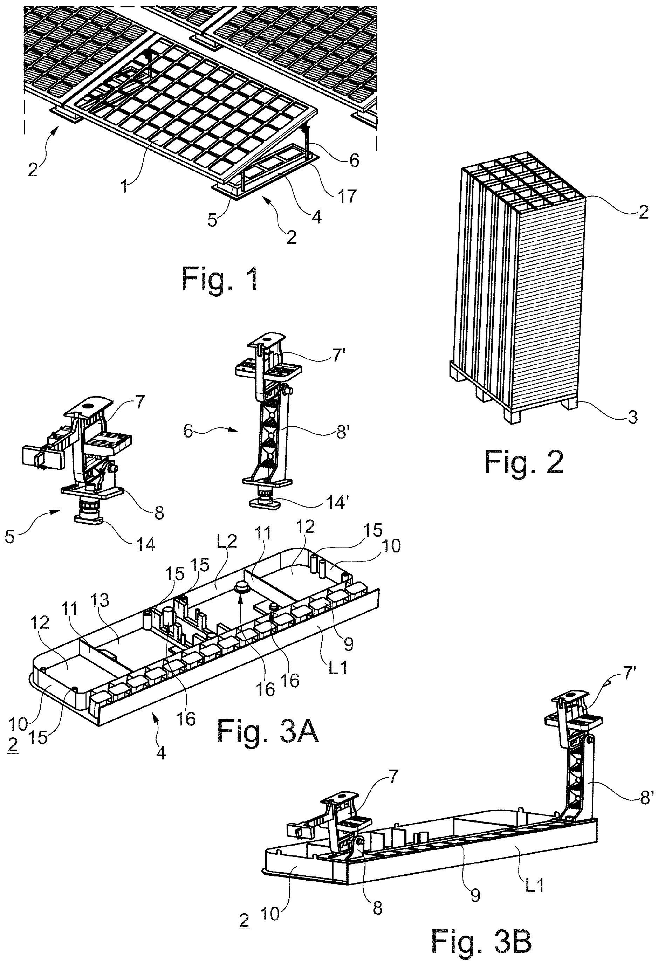

Sur la figure 1, on a illustré de façon schématique des panneaux tels que 1, ici des panneaux solaires à cellules photovoltaïques, qui sont montés en alignement sur un toit plat d'un bâtiment de type industriel par exemple, avec des ensembles de fixation modulaires 2 selon l'invention. La figure 2 illustre un stockage sur une palette 3 d'une pluralité d'ensembles de fixation modulaires 2 selon l'invention. En particulier, on voit que les ensembles de fixation 2 sont dimensionnés pour être gerbés sur la largeur de la palette 3 qui est ici une palette standard "Europe" dite "EURO-PAL".

Selon l'invention, un ensemble de fixation 2 comprend un socle 4 avec un pied avant 5 et un pied arrière 6 de plus grande hauteur que le pied avant 5 comme visible sur les figures 3A et 3B.

Les deux pieds avant 5 et arrière 6 ont une partie haute munie d'une tête inclinable 7, 7' respectivement. Les deux pieds avant 5 et arrière 6 ont également une partie basse 8, 8' respectivement qui est adaptée pour s'insérer dans des cavités 9 du socle 4 comme visible plus particulièrement sur la figure 3B.

Les cavités 9 sont des alvéoles disposées en alignement le long d'un grand côté longitudinal L1 du socle 4. Les cavités 9 sont espacées entre elles à intervalle régulier, par exemple tous les 5 cm, de façon que le pied avant 5 et le pied arrière 6 peuvent être insérés dans des cavités 9 à une position choisie le long du grand côté L1 et donc avec un écart choisi qui correspond à la dimension d'un panneau à fixer sur la toiture. La série de cavités 9 permet par conséquent de fixer plusieurs types de panneaux ayant des dimensions différentes et de régler l'angle d'inclinaison du panneau 1.

Le socle 4 a ici une forme rectangulaire et présente un second grand côté L2 longitudinal opposé au côté L1 qui est bordé par des évidements sans fond c'est-à-dire traversant suivant l'épaisseur du socle 4. Ces évidements sans fond sont définis par une bordure nervurée 10 périphérique du socle et par des nervures de renfort 11 transversales qui s'étendent entre l'alignement de cavités 9 et le grand côté L2. Les logements comprennent deux logements 12 d'extrémité et un logement 13 central plus grand que les logements 12, les logements 12 étant disposés de part et d'autre du logement 13 le long du côté L2.

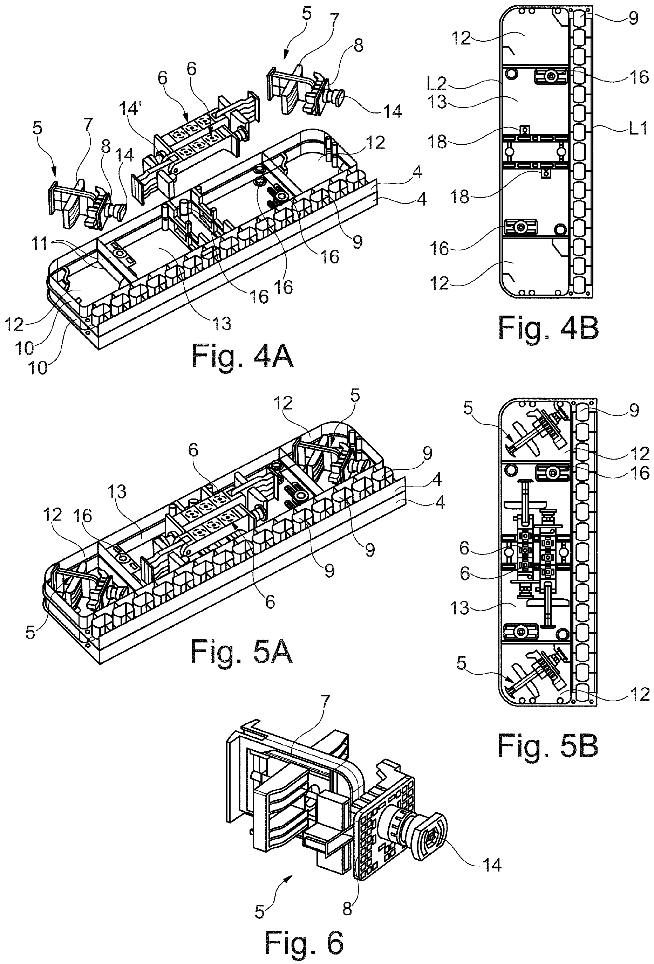

Comme illustré sur les figures 4A et 4B, les logements d'extrémité 12 sont dimensionnés pour loger chacun un pied avant 5 disposé à plat en biais par rapport au côté L2 du socle 4. Selon l'invention, chaque pied avant 5 avec sa tête inclinable trouve sa place en hauteur dans les logements 12 de deux socles 4 superposés.

Le logement 13 central est dimensionné pour loger deux pieds arrière 6 installés à plat en tête bêche et en alignement avec le côté L2 et les deux pieds arrière 6 avec leur tête inclinable trouvent leur place en hauteur dans les logements 13 des deux socles 4 superposés. En état de stockage, on comprend qu'un module de fixation selon l'invention se compose de deux socles 4 superposés, de deux pieds avant 5 et de deux pieds arrière 6 installés dans les logements 12 et 13 comme illustré sur les figures 5A et 5B.

Ce module peut facilement être stocké sur palette 3, les grands côtés L1 et L2 du socle 4 ayant une longueur équivalent à la largeur d'une palette 3 de manutention standard.

Sur la figure 6, on a représenté un pied comme le pied avant 5 avec une tête inclinable 7 en partie haute et une douille à baïonnette 14 en partie basse 8 qui permet le blocage du pied avant 5 dans une cavité 9 par insertion axiale puis rotation d'un 1/4 de tour. On comprend donc que la mise en place sur la toiture d'un module avec deux éléments de fixation pour fixer sur la toiture les deux côtés opposés d'un panneau est une opération simple et rapide.

On a illustré sur la figure 3A des doigts de centrage 15 sur la bordure nervurée 10 périphérique du socle 4. Ces doigts de centrage 15 coopèrent avec des trous de centrage correspondants prévus sur la face arrière du socle et servent à centrer deux socles 4 en superposition ce qui simplifie le gerbage des modules de fixation.

On a aussi illustré sur la figure 3A des éléments d'ancrage portant la référence 16 pour réaliser la fixation par vissage du socle 4 sur le toit. Ces éléments d'ancrage 16 comprennent deux points d'ancrage cylindriques, deux fixations d'ancrage en forme de rondelle et deux bouchons qui sont moulés dans le logement 13 du socle 4 et qui sont rattachés à celui-ci par une languette frangible de façon à être facilement séparés du socle pour être utilisés sur place pour réaliser la fixation sur le toit. Ces éléments 16 sont prévus ici sur le flanc des nervures de renfort 11. Sur la figure 4B, on a désigné par la référence 18 des éléments de calage pour les pieds 6 quand ils sont rangés dans le logement central 13 comme illustré sur la figure 5B.

Sur la figure 1, on a représenté aussi une semelle 17 de protection qui se place entre le socle 4 et le toit et qui peut se fixer par tout moyen au socle et au toit.

Avec ou sans la semelle 17, les socles 4 peuvent être plaqués à plat sur le toit par des lests qui se placent facilement sur le dessus du socle.

Comme visibles sur les figures, le socle rectangulaire 4 d'un ensemble de fixation selon l'invention est conçu symétrique (hors les éléments 16 de fixation et de calage 18) par rapport à une médiane du rectangle du socle 4 pour être réversible à 180° de telle façon que les deux socles 4 superposés d'un module de fixation une fois séparés peuvent être montés sur le toit avec leurs côtés L2 face à face pour porter un panneau 1 ou encore comme montré sur la figure 1, de telle façon que le côté L1 d'un socle 4 fait face au côté L2 d'un autre socle 4 ce qui permet d'installer deux panneaux 1 adjacents sur les mêmes pieds avant 5 et arrière 6.

Comme illustré encore sur la figure 1, le panneau 1 est incliné par exemple de 10 à 30° par rapport au toit grâce à la taille différente des pieds avant 5 et arrière 6 et à la position de ceux-ci le long du côté L1 du socle 4. On peut avec les deux pieds de longueur différente et la série de cavité obtenir un grand nombre de réglages de l'inclinaison d'un panneau.

Avec l'ensemble de fixation modulaire selon l'invention, il est possible de fortement réduire les couts logistiques pour l'installation de panneaux photovoltaïque en toiture de bâtiment industriels.

Les pieds avant 5 et arrière 6 et le socle 4 sont avantageusement réalisés en matière plastique, par exemple par moulage par injection ou par impression 3D.

## Revendications

1. Ensemble de fixation pour fixer un panneau (1) sur un toit de bâtiment comprenant un socle (4) rectangulaire destiné à être fixé à plat sur ledit toit dudit bâtiment et des pieds (5, 6) adaptés pour se fixer entre ledit socle (4) et ledit panneau (1) en permettant une inclinaison réglable dudit panneau (1) par rapport audit toit, **caractérisé en ce que** ledit socle (4) rectangulaire a un premier grand côté (L1) bordé par un alignement de cavités (9) espacées à intervalle régulier, lesdits pieds (5, 6) étant conçus avec une partie basse (8, 8') dudit pied (5, 6) adaptée pour s'insérer dans une desdites cavités (9) dudit socle (4) de façon à être fixé audit socle (4) à une position choisie le long dudit premier grand côté (L1) dudit socle (4) et avec une partie haute munie d'une tête inclinable (7, 7') destinée à être accrochée audit panneau (1), **en ce que** lesdits pieds (5, 6) comprennent un pied avant (5) et un pied arrière (6) de plus grande hauteur que ledit pied avant (5), **en ce que** ledit socle (4) a un second grand côté (L2) opposé audit premier grand côté (L1) et qui est longé par un premier logement (13) et deux seconds logements (12) disposés de part et d'autre dudit premier logement (13) le long dudit second grand côté (L2) dudit socle (4), lesdits logements (12, 13) étant définis par une bordure nervurée (10) dudit socle (4) et des nervures de renforts (11) s'étendant entre l'alignement desdites cavités (9) et ledit second grand côté (L2) dudit socle (4), lesdits logements (12, 13) étant en outre traversant selon l'épaisseur dudit socle (4) et étant dimensionnés de telle manière à loger, quand un socle (4) est superposé à un autre socle (4) dans l'épaisseur desdits deux socles (4) superposés, deux pieds arrière (6) installés à plat, en tête bêche et en alignement avec ledit second grand côté (L2) desdits socles (4) dans ledit premier logement (13) desdits deux socles (4) superposés, et un pied avant (5) en biais par rapport audit second grand côté (L2) desdits deux socles (4) superposés dans chaque second logement (12) desdits deux socles (4) superposés, **en ce que** chaque socle (4) est conçu pour être réversible à 180° de telle façon que lesdits deux socles (4) superposés une fois séparés peuvent être montés sur ladite toiture avec leurs seconds grands côté (L2) face à face pour porter un panneau (1) ou encore avec un second grand côté (L2) d'un socle qui fait face à un premier grand côté (L1) de l'autre socle ce qui permet d'installer deux panneaux (1)adjacents sur les mêmes pieds avant (5) et arrière (6), et **en ce que** lesdits grands côtés (L1,L2) du socle (4) ont une longueur équivalente à la largeur d'une palette (3) de manutention.

2. Ensemble de fixation selon la revendication 1, **caractérisé en ce que** ledit socle (4) bordé par ladite bordure nervurée (10) périphérique est munie de doigts de centrage (15) pour un gerbage desdits socles (4) à plat.

3. Ensemble de fixation selon l'une des revendications 1 ou 2, **caractérisé en ce que** ledit socle (4) est muni de points d'ancrage (16) pour la fixation par vissage dudit socle (4) sur ledit toit.

4. Ensemble de fixation selon l'une des revendications 1 ou 2, **caractérisé en ce qu'** il est prévu une semelle (17) de protection qui se place entre ledit toit et ledit socle (4).

5. Ensemble de fixation selon l'une des revendications 1 ou 2, **caractérisé en ce qu'**il est prévu des lests qui se placent sur le dessus dudit socle (4) pour plaquer ledit socle (4) à plat contre ledit toit.

6. Ensemble de fixation selon l'une des revendications précédentes, **caractérisé en ce que** ledit panneau (1) est un panneau photovoltaïque.

## Patentansprüche

1. Befestigungsanordnung zum Befestigen von einem Paneel (1) auf einem Gebäudedach, umfassend einen rechteckigen Sockel (4), der dazu bestimmt ist, flach auf dem Dach des Gebäudes befestigt zu werden, und Füße (5, 6), die geeignet sind, um zwischen dem Sockel (4) und dem Paneel (1) befestigt zu werden, wodurch eine einstellbare Neigung des Paneels (1) gegenüber dem Dach ermöglicht wird, **dadurch gekennzeichnet, dass** der rechteckige Sockel (4) eine erste lange Seite (L1) aufweist, die von einer Reihe von Hohlräumen (9) gesäumt ist, die in regelmäßigen Abständen beabstandet sind, wobei die Füße (5, 6) mit einem unteren Teil (8, 8') des Fußes (5, 6), der geeignet ist, um in einen der Hohlräume (9) des Sockels (4) derart eingefügt zu werden, um an dem Sockel (4) in einer ausgewählten Position entlang der ersten langen Seite (L1) des Sockels (4) befestigt zu werden, und mit einem oberen Teil ausgebildet sind, der mit einem neigbaren Kopf (7, 7') versehen ist, der dazu bestimmt ist, an dem Paneel (1) eingehängt zu werden, dadurch, dass die Füße (5, 6) einen vorderen Fuß (5) und einen hinteren Fuß (6) von größerer Höhe als der vordere Fuß (5) aufweisen, dadurch, dass der Sockel (4) eine zweite lange Seite (L2) aufweist, die der ersten langen Seite (L1) gegenüberliegt und an der entlang eine erste Aufnahme (13) und zwei zweite Aufnahmen (12) entlanglaufen, die auf beiden Seiten der ersten Aufnahme (13) entlang der zweiten langen Seite (L2) des Sockels (4) angeordnet sind, wobei die Aufnahmen (12, 13) durch einen gerippten Rand (10) des Sockels (4) und Verstärkungsrippen (11) definiert sind, die sich zwischen der Reihe der Hohlräume (9) und der zweiten langen Seite (L2) des Sockels (4) erstrecken, wobei die Aufnahmen (12, 13) ferner in Richtung der Dicke des Sockels (4) durchgehend sind und derart dimensioniert sind, um, wenn ein Sockel (4) von einem anderen Sockel (4) in der Dicke der zwei überlagerten Sockel (4) überlagert ist, zwei hintere Füße (6), die flach installiert sind, entgegengesetzt zu und in Ausrichtung mit der zweiten langen Seite (L2) der Sockel (4) in der ersten Aufnahme (13) der zwei überlagerten Sockel (4) und einen vorderen Fuß (5) schräg zu der zweiten Aufnahme (12) der zwei überlagerten Sockel (4) aufzunehmen, dadurch, dass jeder Sockel (4) ausgebildet ist, um um 180° derart umkehrbar zu sein, dass die zwei überlagerten Sockel (4), nachdem sie getrennt sind, mit ihren zweiten langen Seiten (L2) gegenüberliegend auf dem Dach angebracht werden können, um ein Paneel (1) zu tragen, oder auch mit einer zweiten langen Seite (L2) eines Sockels, der der ersten langen Seite (L1) des anderen Sockels gegenüberliegt, was ermöglicht, zwei benachbarte Paneele (1) auf dem gleichen vorderen (5) und hinteren (6) Fuß anzubringen, und dadurch, dass die langen Seiten (L1, L2) des Sockels (4) eine Länge aufweisen, die der Breite einer Palette (3) zur Handhabung entspricht.

2. Befestigungsanordnung nach Anspruch 1, **dadurch gekennzeichnet, dass** der Sockel (4), der von dem umfänglichen gerippten Rand (10) gesäumt ist, mit Zentrierfingern (15) versehen ist, um die Sockel (4) flach aufeinander zu stapeln.

3. Befestigungsanordnung nach einem der Ansprüche 1 oder 2, **dadurch gekennzeichnet, dass** der Sockel (4) mit Verankerungspunkten (16) versehen ist, um den Sockel (4) durch Verschrauben auf dem Dach zu befestigen.

4. Befestigungsanordnung nach einem der Ansprüche 1 oder 2, **dadurch gekennzeichnet, dass** eine Schutzsohle (17) vorgesehen ist, die zwischen dem Dach und dem Sockel (4) angeordnet ist.

5. Befestigungsanordnung nach einem der Ansprüche 1 oder 2, **dadurch gekennzeichnet, dass** Ballaste vorgesehen sind, die über dem Sockel (4) angeordnet werden, um den Sockel (4) flach gegen das Dach zu drücken.

6. Befestigungsanordnung nach einem der vorhergehenden Ansprüche, **dadurch gekennzeichnet, dass** das Paneel (1) ein Photovoltaik-Paneel ist.

## Claims

1. Fixation assembly for fixing a panel (1) on a building roof comprising a rectangular base (4) intended to be fixed flat on said roof of said building and feet (5, 6) adapted to be fixed between said base (4) and said panel (1) allowing an adjustable inclination of said panel (1) with respect to said roof, **characterized in that** said rectangular base (4) has a first large side (L1) bordered by an alignment of cavities (9) spaced at regular intervals, said feet (5, 6) being designed with a bottom part (8, 8') of said foot (5, 6) adapted to fit into one of said cavities (9) of said base (4) in such a way as to be fixed to said base (4) at a chosen position along said first long side (L1) of said base (4) and with an upper part provided with a tilting head (7, 7') intended to be hooked to said panel (1), **in that** said feet (5, 6) comprise a front foot (5) and a rear foot (6) of greater height than said front foot (5), **in that** said base (4) has a second large side (L2) opposite said first long side (L1) and which is bordered by a first housing (13) and two second housings (12) disposed on either side of said first housing (13) along said second long side (L2) of said base (4), said housings (12, 13) being defined by a ribbed edge (10) of said base (4) and reinforcing ribs (11) extending between the alignment of said cavities (9) and said second large side (L2) of said base (4), said housings (12, 13) being further traversed according to the thickness of said base (4) and being dimensioned so as to accommodate, when a base (4) is superimposed on another base (4) in the thickness of said two bases (4) superimposed, two rear feet (6) installed flat, head-to-tail and in alignment with said second large side (L2) of said bases (4) in said first housing (13) of said two bases (4) superimposed, and a front foot (5) at an angle to said second large side (L2) of said two bases (4) superimposed in each second housing (12) of said two bases (4) superimposed, **in that** each base (4) is designed to be reversible at 180 ° so that said two bases (4) superimposed once separated can be mounted on said roof with their second large side (L2) face to face to carry a panel (1) or with a second large side (L2) of a base which faces a first large side (L1) of the other base which allows to install two panels (1) adjacent on the same front feet (5) and rear feet (6), and **in that** said long sides (L1, L2) of the base (4) have a length equivalent to the width of a handling pallet (3).

2. Fastening assembly according to claim 1, **characterized in that** said base (4) bordered by said peripheral ribbed edge (10) is provided with centering fingers (15) for a stack of said bases (4) flat.

3. Fastening assembly according to one of claims 1 or 2, **characterized in that** said base (4) is provided with anchoring points (16) for fixing by screwing said base (4) on said roof.

4. Fastening assembly according to one of claims 1 or 2, **characterized in that** there is provided a sole (17) of protection which is placed between said roof and said base (4) .

5. Fastening assembly according to one of claims 1 or 2, **characterized in that** there are provided ballasts which are placed on top of said base (4) for pressing said base (4) flat against said roof.

6. Fixing assembly according to one of the preceding claims, **characterized in that** said panel (1) is a photovoltaic panel.
